# EUROPEAN PATENT APPLICATION

(11) **EP 4 455 008 A1**
(43) Date of publication of application: **30.10.2024**
(21) Application number: 23170388.5
(22) Date of filing: 27.04.2023
(51) Int. Cl.: B64D 11/06, B64C 1/20

(54) **METHOD OF MAKING A SEAT RAIL PROFILE FOR ATTACHING SEATS IN AN AIRCRAFT, SEAT RAIL PROFILE, AND METHOD OF ATTACHING AN AIRCRAFT SEAT IN AN AIRCRAFT**

(71) Applicant: Airbus Operations GmbH, 21129 Hamburg (DE)
(72) Inventor: Tacke, Stefan, 21129 Hamburg (DE)
(74) Representative: KASTEL Patentanwälte PartG mbB

(57) **Abstract**

A rail profile (10; 30) for attaching seats and/or cargo in an aircraft is provided by creating a dry preform of the rail profile (10; 30) which is made of reinforcement fibers (16). A pultrusion process is performed, in which the preform is impregnated and/or infused with a thermoplastic or duroplastic matrix material and formed into its final shape. Metallic inserts (11) designed for the attachment of seats (40) and/or cargo are applied into the dry fiber preform prior to the pultrusion process, or into the finally formed and cured profile (10; 30).

## Description

The invention relates to a method of making a seat rail profile for attaching seats in an aircraft. Further, the invention relates to a seat rail profile for attaching seats in an aircraft. In addition, the invention relates to a method of attaching an aircraft seat in an aircraft, and to an aircraft.

The seat rail profile according to the invention may also be used for attaching light cargo in the aircraft.

For attaching seats like e.g. passenger seats in an aircraft, metallic seat rails are currently used. Such known seat rails are characterised by an open, U-shaped cross section with an upper rim.

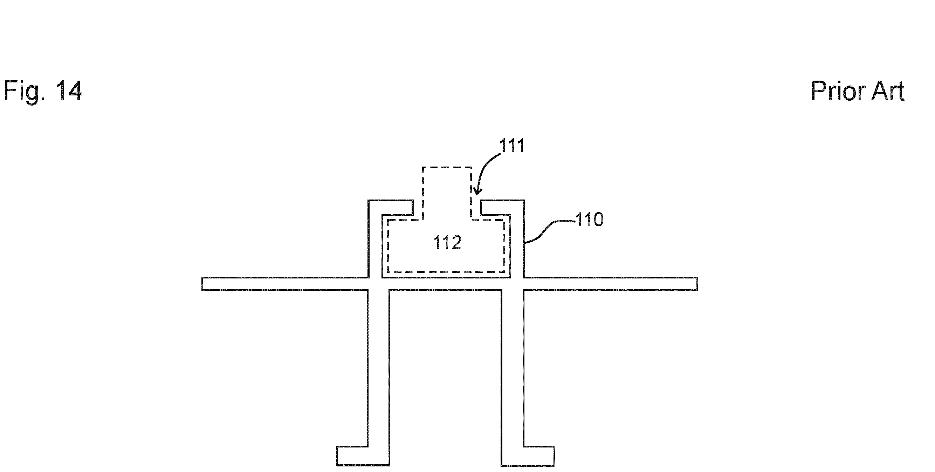

**Figure 14** shows an example of a metallic seat rail 110 according to the prior art. The seat rail 110 is formed as a profile having an upper rim 111 on its topside. The upper rim 111 contains periodically shaped cutouts in which attachment fittings 112 of a seat are placed. Such profiles are usually made from aluminum alloys which are cost effective. However, such alloys are prone to corrosion due to aggressive liquids which may enter into the rail 110, e.g. when drinks are served to the passengers.

To avoid this problem, corrosion resistant profiles made from titanium alloy may be used as seat rails. However, such rails are expensive and heavy, resulting in an increased weight of the aircraft, a high energy consumption during flight and an essential increase of costs for manufacturing and operating the aircraft.

It is the object of the invention to provide a seat rail profile for attaching seats or other elements in an aircraft, which is resistant to corrosion and combines a weight benefit and a cost benefit.

According to a first aspect, the invention provides a method of making a seat rail profile for attaching seats in an aircraft, wherein the seat rail profile is periodically shaped, the method comprising: providing a preform of a seat rail profile, wherein the preform is dry and created of reinforcement fibers; performing a pultrusion process, in which the preform is impregnated and/or infused with a thermoplastic or duroplastic matrix material and formed into its final shape; and inserting metallic inserts designed for the attachment of seats into the finally formed and cured profile or prior to the pultrusion process into the dry fiber preform.

Preferably, the fibers within the preform are bent by introducing the metallic inserts into the dry preform before curing the resin, so that the fibers are pushed aside around the inserts.

Preferably, the fibers are continuous fibers.

Preferably, the fibers are tangled fibers.

Preferably, the fibers are braided, woven, and/or knitted to create the preform.

Preferably, the fibers are made of carbon.

Preferably, that the metallic inserts are inserted at the bottom side of the final profile or of the preform.

Preferably, the metallic inserts are extending through the final profile or through the preform in order to provide seat fastening elements on the upper side of the final profile or of the preform.

Preferably, the metallic inserts are formed as threaded bushes.

Preferably, each metallic insert or bush comprising a flange.

Preferably, the metallic inserts or bushes are inserted in the final profile or in the preform so that their flanges are positioned at the bottom side of the final profile or of the preform.

Preferably, the metallic inserts are forming a chain of threaded bushes.

Preferably, at least a portion of the preform is brought in a periodically curved or periodic polygonal shape in its longitudinal direction.

Preferably, the periodical shape is provided on the side surfaces of the preform or a portion thereof.

According to a second aspect of the invention, a seat rail profile for attaching seats in an aircraft is provided, wherein the rail profile is periodically shaped and made of a fiber reinforced thermoplastic or duroplastic material, and wherein the rail profile is manufactured by a pultrusion process and comprising a plurality of metallic inserts which are designed for fastening one or more aircraft seats to the profile.

Preferably, the seat rail profile comprises reinforcement fibers which are bent around the metallic inserts.

Preferably, the seat rail profile comprises reinforcement fibers which are formed as continuous fibers.

Preferably, the fibers are tangled.

Preferably, the fibers are braided, woven, and/or knitted fibers.

Preferably, the fibers are carbon fibers.

Preferably, the metallic inserts are inserted at the bottom side of the seat rail profile and extend through the profile to provide fastening elements on the upper side of the profile.

Preferably, the metallic inserts are formed as threaded bushes each comprising a flange, wherein the flanges are positioned at the bottom side of the profile.

Preferably, the metallic inserts are formed as a chain of threaded bushes.

Preferably, the profile comprises a periodically curved or a periodic angular outer shape in its longitudinal direction.

Preferably, the periodically curved or periodic angular outer shape is formed on both sides of the profile.

Preferably, the form and/or the directions of the fibers which extend in the profile is adapted to the periodically curved or periodic angular outer shape of the profile.

Preferably, at least an upper section of the profile is formed for being inserted into an attachment element or attachment fitting of the aircraft seat.

Preferably, the seat rail profile is manufactured by the method according to the invention.

The attachment element may comprise inner side faces which are shaped invertedly or opposite to the outer shape of the seat rail profile. Thus, the outer shape of the seat rail profile will mutually engage with the inner side faces of the attachment element.

Preferably, the attachment element is formed as a block comprising a slit or rim at its bottom to accommodate the upper section of the seat rail profile when the seat is mounted on the seat rail.

The attachment element or fitting may also be part of a cargo fixation device instead of a seat attachment element. Thus, the seat rail profile may also be configured as a cargo fixation profile.

The attachment element and the seat rail profile may form an attachment system.

According to a third aspect, the invention provides a method of attaching an aircraft seat in an aircraft, comprising: providing a seat rail profile manufactured according to one of claims 1 to 5 and/or configured according to one of claims 6 to 12; placing an attachment element of an aircraft seat or of a cargo on top of the rail profile; and fixing the attachment element to the rail profile by introducing a fastener element through the attachment element into a metallic insert provided in the rail profile.

The seat or cargo may be moved along the seat rail profile after being attached thereto by the following steps: removing the fastener element from the metallic insert; lifting the attachment element; and shifting the attachment element to another position, where the profile has an outer shape which allows to slide down the attachment element over at least a portion of the rail profile and to fix the attachment element at that position to the rail profile.

According to a further aspect, the invention provides an aircraft which comprises a seat rail profile according to the invention.

The pultruded carbon fiber reinforced (CFRP-) profile can be used for seat or light cargo attachment for any aircraft.

Seat rail profiles according to the invention are not prone to corrosion and combine a weight benefit and a cost benefit, due to the manufacturing process.

Moreover, the seat rails designed or manufactured according to the invention withstand high forces which may act on the seat rail at the mounting positions of the seats, e.g. when heavy turbulences occur during flight. Such forces act on the seat rail profile in a vertical direction and may be in the range of 25 or 30 kN, which causes a corresponding bending moment to the seat rail profile. Characteristics and advantages described in relation to the method of making a rail profile are also related to the rail profile and vice versa.

In the following, exemplary embodiments of the invention showing further characteristics and advantages are described in detail with reference to the figures, in which:
- **Fig. 1**: shows a cross sectional view of a seat rail profile according to a first preferred embodiment of the invention;
- **Fig. 2**: shows a top view of the profile shown in Fig. 1;
- **Fig. 3**: shows a bottom view of the profile shown in Fig. 1;
- **Fig. 4**: shows a top view of a seat rail profile according to an alternative configuration;
- **Fig. 5**: shows a cross sectional view of the seat rail profile according to the invention, together with an attachment element of an aircraft seat or of a cargo fixed thereon;
- **Fig. 6**: shows a cross sectional view of a single metallic insert of the profile according to preferred embodiments of the invention;
- **Fig. 7**: shows a top view of chained threaded bushes which may be inserted into the profile as an option;
- **Fig. 8**: shows a side view cross section of the chained threaded bushes shown in Fig. 7;
- **Fig. 9**: shows a cross sectional view of a seat rail profile according to a second preferred embodiment of the invention;
- **Fig. 10**: shows a top view of the profile shown in Fig. 9;
- **Fig. 11**: shows a bottom view of the profile shown in Fig. 9;
- **Fig. 12**: shows a side view of a seat rail profile according to the preferred embodiments of the invention with a seat mounted thereon;
- **Fig. 13**: shows a side view of the seat rail profile shown in Fig. 12 when the seat is being moved on the seat rail profile to another position; and
- **Fig. 14**: shows a cross sectional view of a seat rail profile according to the prior art.

In the figures, similar or identical elements and features are designated by the same reference numbers.

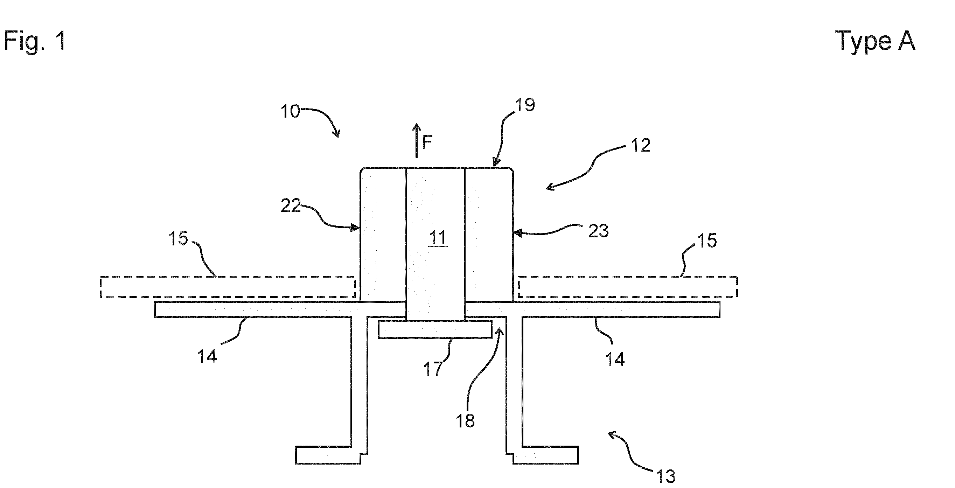

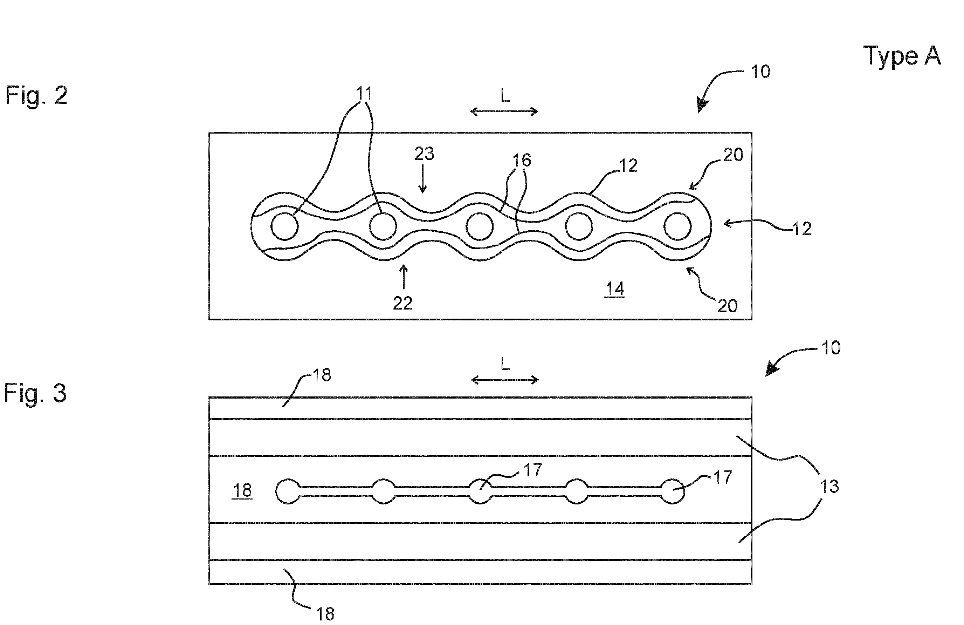

**Figs. 1 to 4** show a seat rail profile 10 according to a first preferred embodiment of the invention. The rail profile 10 is configured for mounting seats in an aircraft. It is also referred to as a Type-A profile. The seat rail profile 10 is periodically shaped in its longitudinal direction as shown in **Fig. 2****.** The profile 10 is made of a fiber reinforced thermoplastic or duroplastic material and is manufactured by a pultrusion process. The profile 10 comprises a plurality of metallic inserts 11 which are designed for fastening a number of aircraft seats and/or light cargo pieces.

The seat rail profile 10 comprises an upper profile section 12 supported by a support profile section 13. The upper profile section 12 is formed as a solid block, i.e. it has a solid cross-section. Flanges 14 for being covered by floor panels 15 of the aircraft are extending on both sides of the seat rail profile 10. Preferably, upper profile section 12, support profile section 13 and the flanges 14 for the floor panels are preferably configured and manufactured as one piece in a pultrusion process.

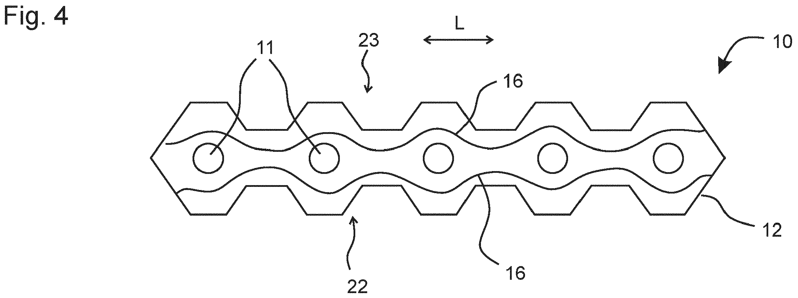

The rail profile 10 comprises a plurality of reinforcement fibers which are schematically indicated by two symbolic lines 16 in figures 2 and 4. Since the fibers are provided within profile 10, they are not visible in reality. For the sake of clarity, only two curved lines 16 are depicted to indicate the principle of the main orientation of the fibers as an example. The plurality of reinforcement fibers 16 forms a reinforcement fiber arrangement, in which the fibers 16 are bent around the metallic inserts 11, as indicated by lines 16.

The fibers 16 are preferably continuous carbon fibers, and the fiber arrangement is preferably created by knitting, braiding, weaving or a combination thereof, to form a fiber arrangement consisting of fibers or tangled fibers.

The metallic inserts 11 are formed as threaded bushes, each bush comprising a flange 17. The inserts or bushes 11 extend vertically through the profile 10, i.e. from the bottom side 18 of profile 10 through its upper section 12 to its topside 19. The flanges 17 of bushes 11 are positioned at the bottom side 18 to support the bushes 11 on the underside 18 of the seat rail profile 10 when upwards directed pull forces F are acting on the inserts or bushes 11 (see also Fig. 3). The forces F may be in a range of about 25 to 30 kN.

As depicted in **Fig. 2****,** which shows a top view of rail profile 10, the upper section 12 of rail profile 10 has a periodically curved outer shape 20. In other words, the outer shape 20 is periodically repeating in the longitudinal direction L of profile 10. More specifically, it has a sinusoidal form extending in the longitudinal direction L. The periodically curved shape 20 is formed on both sides or side faces 22, 23 of the profile 10 which form outer contact surfaces for an attachment element of a seat or a cargo when it is fixed to the profile 10.

The arrangement of a high number of fibers 16, which is extending within upper section 12 of profile 10, is adapted with its fiber structure to the periodically curved outer shape 20. The fibers 16 of the fiber arrangement, which extend in the lengthwise direction L within upper section 12 of profile 10, run around the metallic inserts 11 formed as threaded bushes and comprise a similar periodic main route of the continuous or endless fibers.

**Fig. 3** shows a bottom view of the rail profile 10. Support profile 13 provided at the bottom side 18 of profile 10 is open, i.e. u-shaped with downward directed sides, and extends in the longitudinal direction L. The flanges 17 of threaded bushes 11, which are inserted from below into the profile 10, are visible in this perspective. The bushes or inserts 11 extend from the bottom side 18 of profile 10 through the central portion of the support profile section 13 and further through the upper profile section 12 to the topside 19 of profile 10 L (see also Fig. 1).

As depicted in **Fig. 4****,** which shows another configuration of the upper profile section 12, the outer shape 20 of upper profile section may be different from that shown in Fig. 2. According to this alternative, the outer shape 20 is formed periodically angular and comprises corners instead of being curved. That means it may have an angular curvature or shape 20 forming an angular pattern which is repeated along the longitudinal direction L of profile 10. Besides these examples, also other periodical outer shapes can be realized.

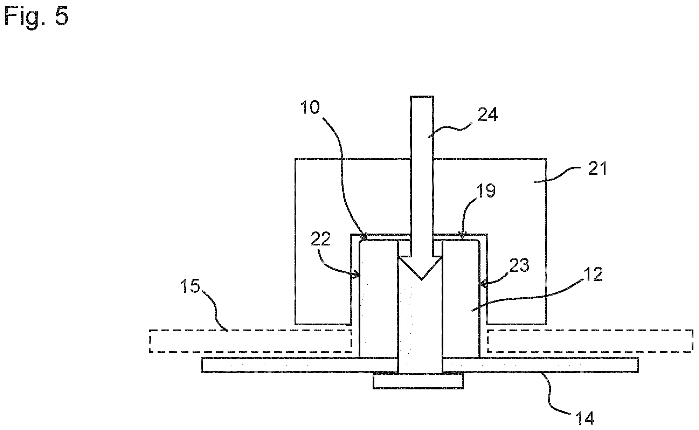

As depicted in **Fig. 5****,** the upper section 12 of rail profile 10 is formed for being inserted from below in an upward direction into an attachment element 21 of an aircraft seat or a cargo fastener. For this purpose, the attachment element 21 being formed as a solid block is laid over profile 10 and is pushed downwards towards profile 10, so that it contacts with its interior surfaces forming a rim the topside 19 of upper section 12 as well as both sides 22, 23 of upper section 12. A screw 24 is provided as a fastening means for fastening the attachment element 21 to profile 10 by screwing the screw 24 from above through attachment element 21 into threaded bush 11, which is fixed within profile 10.

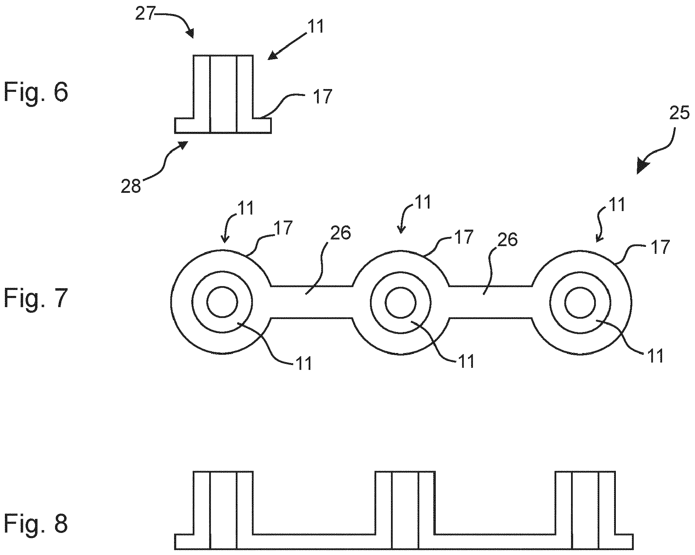

As shown in **Fig. 6****,** single metallic inserts 11 or threaded bushes can be used in the profile 10 for fastening attachment element 21 to profile 10. The bushes 11 have a top side 27, and a bottom side 28 where flange 17 is formed.

As an option, as shown in **Figs. 7 and 8****,** it is also possible to provide a chain 25 of bushes or metallic inserts 11 instead of single bushes. In this case, the bushes or metallic inserts 11 are connected to each other by their flanges 17 to form the chain of bushes 25. In other words, metallic connecting elements 26 are connecting the flanges 17 which are arranged in a row. The flanges 17 and the metallic connecting element 26 may form a single common flange arrangement connecting a number of bushes 11 arranged in a row. This provides the advantage of a larger flange surface for supporting the bushes 11 on the bottom side 18 of rail profile 10. Moreover, the chain of bushes 25 forms an electric current return conductor due to its metallic material.

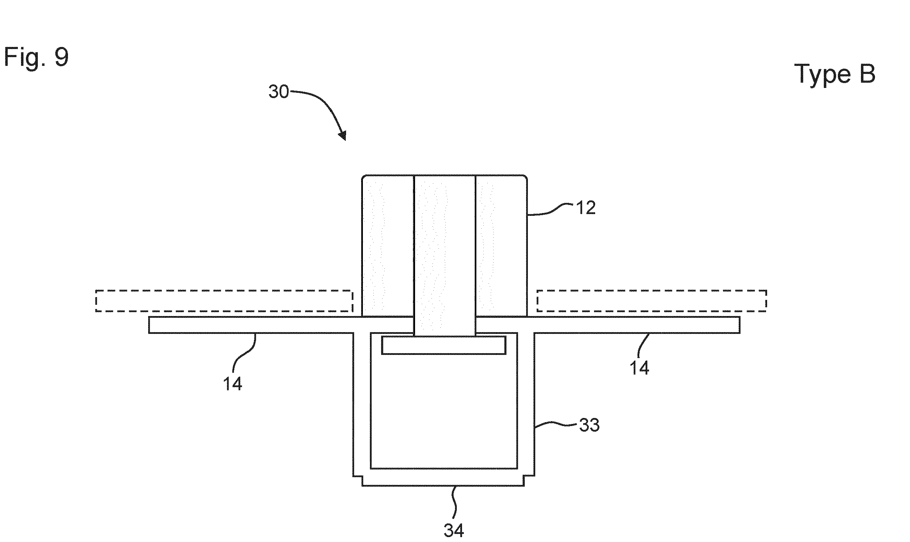

Referring to **Figs. 9 to 11** now, a second preferred embodiment of a seat or cargo rail profile according to the invention is described. In this embodiment, which is also referred to as a Type-B seat rail profile 30, the support profile section 33 of rail profile 30 is formed as a hollow profile for supporting upper profile section 12 of the profile. The upper profile section 33 may be configured identically or similarly to that of the first embodiment as described above and shown in the figures. As an option, its periodic outer shape 20 may also be configured as described above with reference to Fig. 4.

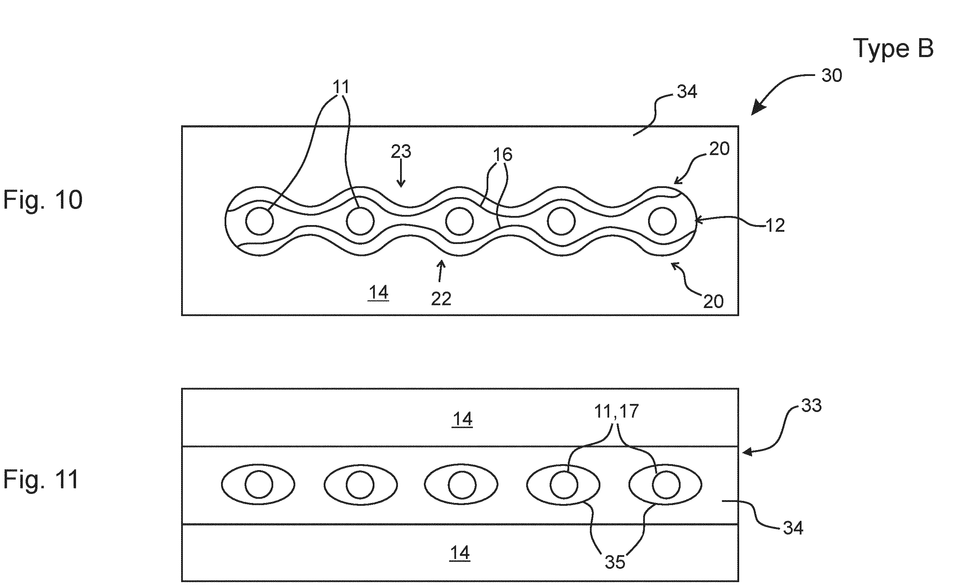

As depicted in **Fig. 10****,** which shows a top view of profile 13, a bottom wall 34 of hollow profile 33 extends along profile 13. The openings 35 are provided in the bottom wall 34 through which the metallic inserts or threaded bushes 11 with the flanges 17 are inserted into the upper section 12 of profile 33.

Similar to rail profile 10 according to the first embodiment of the invention, the support profile 33 comprises the flange portions 14 which extend under floor panel 15 of the aircraft on both sides of rail profile 30.

However, it is preferred that only single threaded bushes 11 are inserted into the upper profile to provide fastening elements for attaching seat or cargo fasteners, i.e. no chain of bushes is used.

All other elements and features of profile 13 are similar or identical to those of seat rail profile 10 according to the first embodiment of the invention as described above with reference to figures 1 to 5. Identical elements or parts are designated by the same reference numbers in the figures. The same options, alternatives and variations as described above can be realized.

An example of a method of making a seat rail profile for attaching seats and or cargo elements in an aircraft is described in the following.

As a first step, a preform of a seat rail profile is provided. The preform is created of reinforcement fibers and dry. The preform is preferably configured to result in a profile similar or identical to the profiles 10, 30 as described above when the process is finished.

Then a pultrusion process is performed. During the pultrusion process, the preform made of fibers is impregnated or infused with thermoplastic or duroplastic matrix material in form of a resin and formed into its final shape.

Metallic inserts 11, which are preferably identical or similar to those described above, are inserted into the dry fiber preform prior to the pultrusion process. Alternatively, they are inserted into the finally formed and cured profile.

The preform comprises an arrangement of continuous carbon fibers which are also referred to as endless fibers. The fibers are preferably braided, woven and/or knitted to create the preform. More generally spoken the fibers are tangled.

Preferably, the metallic inserts 11 are pushed or pressed into the fiber arrangement which forms a block of fibers which is used as the preform. During insertion of the metallic inserts 11, the fiber block or preform is widened around the locations where the metallic inserts 11 are positioned.

Since the inserts 11 are positioned in the fiber block at equal distances from each other, the widening of the fiber block due to the insertion of the metallic inserts 11 causes a periodically curved outer shape of the fiber block as described above. The periodically curved outer shape is on both sides of the fiber preform block. By the insertion of the metallic inserts 11, the fibers located at the insert positions are pushed aside and thus the fiber block is periodically widened around the inserts 11. In this way the fibers are bent around the inserts 11.

However, it is also possible to apply the metallic inserts 11 after curing the matrix material.

Since the fibers of the fiber block are tangled, the final profile which comprises cured thermoplastic or thermoplastic matrix material provides a very high strength in all directions.

The metallic inserts 11 are inserted at the bottom side of the final profile or of the preform and extending through it. In this way they provide a seat or cargo fastening element which is accessible on the upper side or topside 19 of the final profile or of the preform.

The metallic inserts 11 are formed as threaded bushes, wherein each bush comprises a flange 17. The metallic inserts 11 are inserted either in the final profile or in the preform in a way that the flanges 17 are positioned at the bottom side 18 of the final profile or of the preform. The inserts 11 may be formed as a chain of threaded bushes, or they may be single threaded bushes, as described above.

Instead of bringing the preform in a periodically curved shape extending in its longitudinal direction, the preform may also be brought in a periodic polygonal shape in its longitudinal direction.

Preferably, rail profile 10, 13 as described above is created by the method.

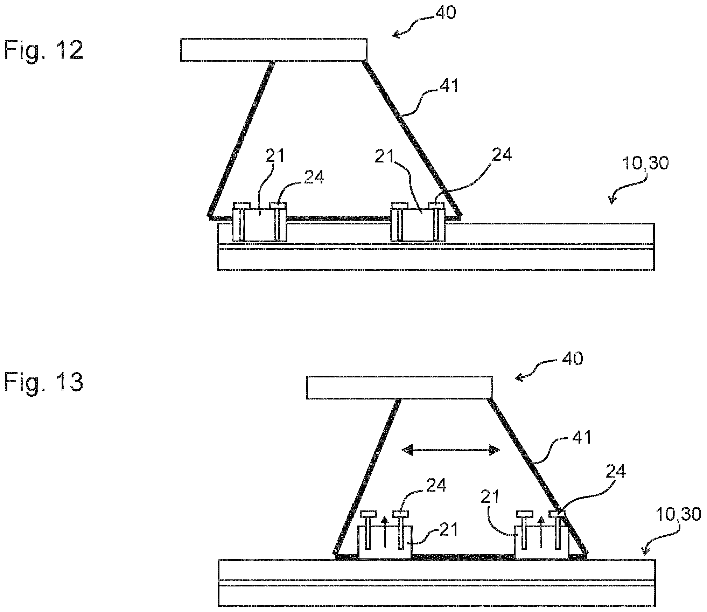

Now, with reference to **Figs. 12 and 13****,** a method for attaching an aircraft seat 40 in an aircraft is described as a preferred example. However, also cargo can be attached according to the method.

First, the rail profile 10, 30 is provided which may be configured and/or manufactured according to the invention, preferably as described above with reference to the figures. The rail profile is mounted in the aircraft.

Then, an attachment element 21 of an aircraft seat 40 is placed on top of the rail profile 10, 30, so that it overlays the profile on both sides. The attachment element 21 or fitting may also be configured as a cargo fastener e.g. of a cargo container or cargo piece.

Thereafter, fastener elements 24, which are preferably configured as screws, are introduced from above through the attachment element 21 into metallic insert 11 provided in the rail profile 10, 13, which is e.g. configured as described above. The attachment elements 21 are e.g. connected or fastened to a linkage 41 of seat 40.

The seat 40, or in other embodiments a cargo element which comprises the attachment elements 21, can be moved along the rail profile 10, 13 after being mounted thereto. For this purpose, the fastener element or screw 24 is removed from the metallic insert 11 provided in the interior of the profile 10, 30. Then, the attachment element 21 is lifted until its interior side surfaces forming a rim on the bottom side of attachment element 21 are released from the mutual engagement with the periodically shaped outer surfaces of rail profile 10, 13.

In this position, the attachment element may be shifted or moved to another position on profile 10, 13, where the outer shape of the profile allows the attachment element 21 to slide down over the rail profile so that the opposing inner surfaces of the attachment element 21 are brought again in mutual engagement with the periodically shaped outer surfaces of rail profile 10, 13. In the new position, the attachment element 21 is fixed to seat rail profile 10, 13 by screwing the fastening element or screw 21 into the metallic insert 11 provided within rail profile 10, 30.

The solid, periodically shaped seat rail profile 10, 13 according to the invention enables a preferable load transfer from an invertedly shaped attachment block 21 of a seat or of a cargo element. As several surfaces come into contact, the forces in longitudinal directions are transferred with low surface pressure. Forces in vertical direction are transferred by screws 24 into the threaded bushes 11 which are integrated in profile 10, 30.

In particular, the seat 14 can be sliding on the top of the profile when the screws 24 and the attachment or mounting block 21 are released. The surface of the rail profile 10, 13 is preferably coated in order to reduce friction and wear.

The preform of the proposed profile can be created by knitting, braiding or 3D-weaving, preferably using continuous carbon fibers. This preform can be impregnated or infused with the thermoplastic or duroplastic matrix material in a continuous pultrusion process. During this process, the shape of the upper rail profile 12 can be imprinted.

Threaded bushes with a flange can be applied to the finally formed and cured profile or prior to the pultrusion process into the dry fiber preform. The flange is placed at the bottom side of the seat rail profile in order to avoid a pull-out of the bush to the topside.

The threaded flanged bushes can be single bushes or a chain of bushes. A chain of bushes offers the opportunity to fulfil the requirements of the electrical structural network (ESN) of an aircraft.

### List of reference numbers:

- 10: seat rail profile / cargo rail profile
- 11: metallic inserts / threaded bushes
- 12: upper profile section
- 13: support profile section
- 14: flanges for floor panel
- 15: floor panel
- 16: fibers
- 17: flanges
- 18: bottom side
- 19: topside of profile
- 20: periodic outer shape
- 21: attachment element
- 22, 23: sides of upper profile section
- 24: screw
- 25: chain of bushes
- 26: metallic connecting elements
- 27: topside of metallic insert
- 28: bottom side of metallic insert
- 30: seat rail profile / cargo rail profile
- 33: support profile section
- 34: bottom wall
- 35: openings

- F: pull forces
- L: longitudinal direction

## Claims

1. Method of making a seat rail profile for attaching seats in an aircraft, wherein the rail profile (10; 30) is periodically shaped, the method comprising:
- providing a preform of the rail profile (10; 30), wherein the preform is created of reinforcement fibers (16) and dry;
- performing a pultrusion process, in which the preform is impregnated and/or infused with a thermoplastic or duroplastic matrix material and formed into its final shape; and
- applying metallic inserts (11) designed for the attachment of seats (40) and/or cargo prior to the pultrusion process into the dry fiber preform or into the finally formed and cured profile (10; 30).

2. Method according to claim 1, **characterized in that** the fibers (16) within the preform are bent by introducing the metallic inserts (11) into the dry preform before curing the matrix material, so that the fibers (16) are pushed aside around the inserts (11).

3. Method according to claim 1 or 2, **characterized in that** the fibers (11) are
3.1. continuous fibers; and/or
3.2. tangled fibers; and/or
3.3. braided, woven, and/or knitted to create the preform; and/or
3.4. made of carbon.

4. Method according to one of the preceding claims, **characterized in that** the metallic inserts (11)
4.1. are inserted at the bottom side (18) of the final profile (10;30) or of the preform and extending through it in order to provide seat and/or cargo fastening elements on the upper side of the final profile (10;30) or of the preform; and/or
4.2. are formed as threaded bushes each comprising a flange (17), which are inserted in the final profile (10; 30) or in the preform so that their flanges (17) are positioned at the bottom side (18) of the final profile (10;30) or of the preform; and/or
4.3. are formed as a chain of threaded bushes (25).

5. Method according to one of the preceding claims, **characterized in that** at least a portion (12) of the preform is brought in a periodically curved or periodic polygonal outer shape (20) in its longitudinal direction.

6. Seat rail profile for attaching seats and/or cargo in an aircraft, the rail profile (10; 30) being periodically shaped and made of a fiber reinforced thermoplastic or duroplastic material,
wherein the rail profile (10; 30) is manufactured by a pultrusion process and comprising a plurality of metallic inserts (11) which are designed for fastening one or more aircraft seats (40) and/or cargo to the profile (10;30).

7. Seat rail profile according to claim 6, **characterized in that** it comprises reinforcement fibers (16) which are bent around the metallic inserts (11).

8. Seat rail profile according to claim 7, **characterized in that** reinforcement fibers (16) are formed as
8.1. continuous fibers; and/or
8.2. tangled fibers; and/or
8.3. braided, woven, and/or knitted fibers; and/or
8.4. carbon fibers.

9. Seat rail profile according to one of claims 6 to 8, **characterized in that** the metallic inserts (11)
9.1. are inserted at the bottom side (18) of the profile (10; 30) and extending through the profile (10; 30) to provide fastening elements on the upper side (9) of the profile (10;30); and/or
9.2. are formed as threaded bushes each comprising a flange (17), wherein the flanges (17) are positioned at the bottom side (18) of the profile (10; 30); and/or
9.3. are formed as a chain of threaded bushes (25).

10. Seat rail profile according to one of claims 6 to 9, **characterized in that** the profile (10; 30) comprises a periodically curved or periodic angular outer shape (20).

11. Seat rail profile according to claim 10, **characterized in that** the form and/or the directions of the fibers (16) extending in the profile is adapted to the periodically curved or periodic angular outer shape of the profile.

12. Seat rail profile according to one of claims 6 to 11, **characterized in that** at least an upper section (12) of the profile (10; 30) is formed for being inserted into an attachment element (21) of the aircraft seat (40) or the cargo.

13. Method of attaching an aircraft seat or a cargo in an aircraft, comprising:
- providing a seat rail profile (10; 30) according to one of claims 6 to 12 and/or a seat rail profile (10; 30) which is manufactured according to one of claims 1 to 5;
- placing an attachment element (21) of an aircraft seat (40) or a cargo on a topside (19) of the rail profile (10; 30); and
- fixing the attachment element (21) to the rail profile (10; 30) by introducing a fastener element (24) through the attachment element (21) in a metallic insert (11) provided in the rail profile (10; 30).

14. Method according to claim 13, **characterized in that** the seat (40) or cargo is moved along the rail profile (10; 30) after being mounted thereto by the following steps:
- removing the fastener element (24) from the metallic insert,
- lifting the attachment element (21), and
- shifting the attachment element (24) to another position, where the profile (10; 30) has an outer shape which allows to slide down the attachment element over the rail profile (10; 30) and to fix the attachment element at that position to the rail profile (10; 30).

15. Aircraft, comprising a seat rail profile (10; 30) according to one of claims 6 to 12.
